**Europäisches Patentamt**

(19) **European Patent Office**

**Office européen des brevets**

(11) Numéro de publication: **0 000 799**
**B1**

(12) # FASCICULE DE BREVET EUROPEEN

(45) Date de publication du fascicule de brevet:
07.01.81

(51) Int. Cl.³: **B 60 C 25/06**

(21) Numéro de dépôt: **78200118.4**

(22) Date de dépôt: **26.07.78**

(54) Mécanisme pour régler l'outil d'un appareil utilisé pour poser et enlever un pneu d'automobile.

(30) Priorité: **10.08.77 BE 256145**

(43) Date de publication de la demande:
**21.02.79 Bulletin 79/4**

(45) Mention de la délivrance du brevet:
**07.01.81 Bulletin 81/1**

(84) Etats contractants désignés:
**CH DE FR GB NL SE**

(56) Documents cités:
**BE-A-484 405**
**BE-A-852 397**
**DE-A-2 416 668**
**US-A-1 498 299**
**US-A-2 816 604**

(73) Titulaire: **Du Quesne, Francis, Cleistraat 138,
B-2630 Aartselaar (BE)**

(72) Inventeur: **Du Quesne, Francis, Cleistraat 138,
B-2630 Aartselaar (BE)**

(74) Mandataire: **Ottelohe, Jozef René, Bureau Ottelohe J.R.
Postbus 3 Fruithoflaan 105, B-2600 Antwerpen (Berchem)
(BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG.

Mécanisme pour régler l'outil d'un appareil utilisé pour poser et enlever un pneu d'automobile

L'invention a pour objet un mécanisme qui sert à régler à distance d'une roue, l'outil d'un appareil utilisé pour poser et enlever un pneu d'automobile, ladite roue étant fixée sur une table tournante, commandée par un moteur et animée d'un mouvement de rotation de long du dit outil.

On connaît déjà un appareil utilisé pour poser et enlever un pneu d'automobile (DE-A-2 416 668) se composant d'une colonne verticale, d'un bras horizontal qui peut se déplacer transversalement dans cette colonne et dans lequel il est placé une barre axialement déplaçable en hauteur portant à sa partie inférieure un outil pour poser en enlever le pneu. La roue est fixée sur une table tournante sous l'outil précité. Dans la colonne il est fixé une boîte dans laquelle le bras est librement monté et y peut être fixé par l'intermédiaire d'un dispositif de fixation commandé par un dispositif pneumatique.

Ce dispositif présente le désavantage que pour régler l'outil à une distance désirée de la roue, tant dans un plan horizontal que dans un plan vertical, afin d'éviter un frottement entre la roue et l'outil, il faut déplacer le bras horizontal dans la boîte de la colonne, fixer ce bras et déplacer en hauteur la barre dans le bras. Il faut donc effectuer diverses manipulations. Un autre désavantage est que pour chaque nouvelle opération, il faut écarter et replacer l'outil en position de travail.

On connaît aussi un autre appareil (BE-A-852 387) comportant d'une part un bras horizontal sur lequel il est monté un chariot déplaçable le long de ce bras et dans lequel il est suspendu une barre avec outil, réglable en hauteur, et d'autre part un unique moyen permettant de fixer en même temps le chariot sur le bras, de fixer la barre dans le chariot et de placer sous un certain angle la barre précitée pour placer dans deux sens l'outil à une distance prédéterminée de la roue fixée.

En dehors du fait qu'un tel appareil est relativement compliqué et d'une construction coûteuse, il faut encore effectuer diverses manipulations pour écarter et replacer l'outil en position de travail à chaque nouvelle opération.

Le but de l'invention est de réaliser un mécanisme de construction relativement simple au moyen duquel il ne faut effectuer qu'un minimum de manipulations pour placer l'outil à la distance désirée de la roue, tant dans un plan horizontal que dans un plan vertical, afin d'éviter un frottement entre la roue et l'outil.

Conformément à la caractéristique principale de l'invention, le bras transversalement déplaçable dans la colonne verticale, est monté en déclivité vers la roue et entre le bras et la colonne verticale, il est prévu un moyen de déplacement et de fixation permettant d'une part le déplacement entièrement libre et le déplacement progressif du bras dans un sens opposé à la roue par rapport à la colonne verticale afin de régler la distance entre la roue et l'outil et d'autre part le blocage du bras dans le sens de la roue par rapport à la colonne verticale.

Grâce au montage du bras en déclivité vers la roue et au moyen de déplacement et de fixation relativement simple, il est donc possible de régler l'outil à la distance désirée de la roue, tant dans le plan horizontal que dans le plan vertical, en effectuant un minimum de manipulations. Il n'est en outre pas nécessaire de régler chaque fois l'appareil lorsqu'il faut poser et enlever successivement plusieurs roues et pneus de mêmes dimensions.

A titre d'exemple et sans que celui-ci ait un caractère limitatif quelconque, il va être donné ci-après une description détaillée d'une forme d'exécution choisie du mécanisme, conforme à l'invention. Cette description renvoie aux dessins ci-annexés dans lesquels:

la fig. 1 est une vue latérale du mécanisme monté sur un appareil utilisé pour poser et enlever un pneu d'automobile;

la fig. 2, une vue latérale agrandie du mécanisme au repos avec pièces partiellement coupées;

la fig. 3, une vue identique à celle de la fig. 2 mais dans laquelle le mécanisme est en position de travail.

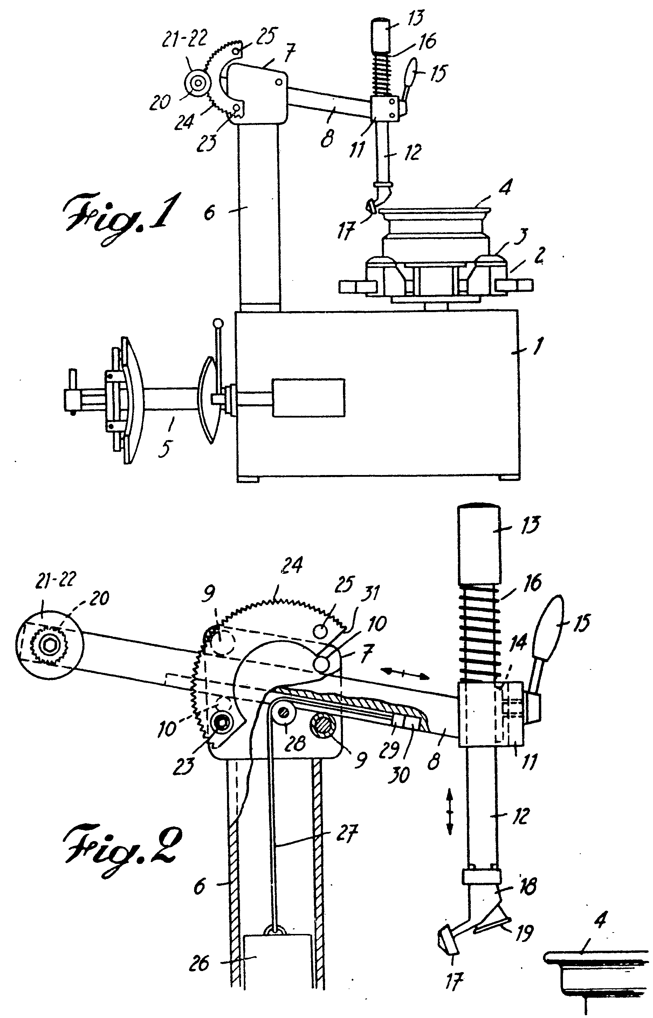

Dans la figure 1, on voit le bâti 1, dans lequel est logé un mécanisme de commande d'une table tournante 2 à griffes 3 pour fixer et commander la roue 4 de manière à la faire tourner. L'appareil peut être pourvu d'un dispositif bien connu 5 pour décoller le pneu. Une colonne verticale 6 est fixée sur le bâti 1. Cette colonne verticale 6 porte à la partie supérieure une boîte 7. Dans cette boîte, il est monté en déclivité vers la roue, un bras 8 axialement déplaçable, guidé entre deux galets de guidage 9 montés en diagonale et deux tenons 10 montées en diagonale. Grâce à cette disposition, le bras 8 peut être roulé dans la boîte 7 et est monté sous un angle fixe. L'extrémité du bras 8 dirigée vers la roue 4 est pourvue d'un bloc 11 dans lequel est suspendue verticalement une barre 12 avec poignée 13. Cette barre est réglable en hauteur et peut, grâce à un moyen de blocage 14 avec poignée 15, être fixée dans le bloc 11. Entre la poignée 13 et le bloc 11, il est placé un ressort de pression 16, qui équilibre le poids de la barre 12. L'outil qui sert à poser et à enlever le pneu de la roue est fixé à la partie inférieure de cette barre 12. Fait partie de cet outil, le galet de pression 17 qui est fixé sur le support 18 de la barre 12, lequel galet de pression coopère avec le talon du pneu à poser. Fait aussi partie de cet outil, le galet de guidage 19 qui sert à guider le talon du pneu hors de la circonférence de la jante de la roue lors de la pose du pneu. A l'arrière il est monté sur le bras 8 une roue libre dentée 20 qui peut tourner librement dans le sens de rotation des aiguilles d'une montre mais non dans le sens inverse. Cette roue libre dentée est montée entre deux brides 21–22 en forme de disque. Par l'intermédiaire d'un axe 23, il est monté sur la boîte 7 l'extrémité d'un segment denté 24 qui, au moyen d'une poignée 25 placée à l'autre extrémité dudit segment, peut être mis en prise avec la roue libre dentée 20. Pour des raisons de sécurité, les brides 21–22, recouvrent également la partie en prise avec la roue libre dentée 20 du segment denté 24. L'axe 23 du segment denté 24 se compose d'un boulon avec écrou et entre le segment denté et l'écrou il est prévu une rondelle de ressort qui exerce une pression sur le segment denté, de telle manière qu'on puisse placer et maintenir le segment denté dans une position désirée. Pour maintenir en équilibre le bras 8, il est placé dans la colonne verticale 6 un contrepoids 26 qui, par l'intermédiaire d'un câble 27 passant par-dessus un galet de câble 28, est fixé à un petit bloc 29 du bras 8. Le câble 27 est logé dans une rainure 30, prévue à la partie inférieure du bras 8. Le segment denté 24 est de préférence pourvu de deux butées qui coopèrent avec des parties fixes de la boîte 7 pour limiter les deux positions extrêmes de ce segment.

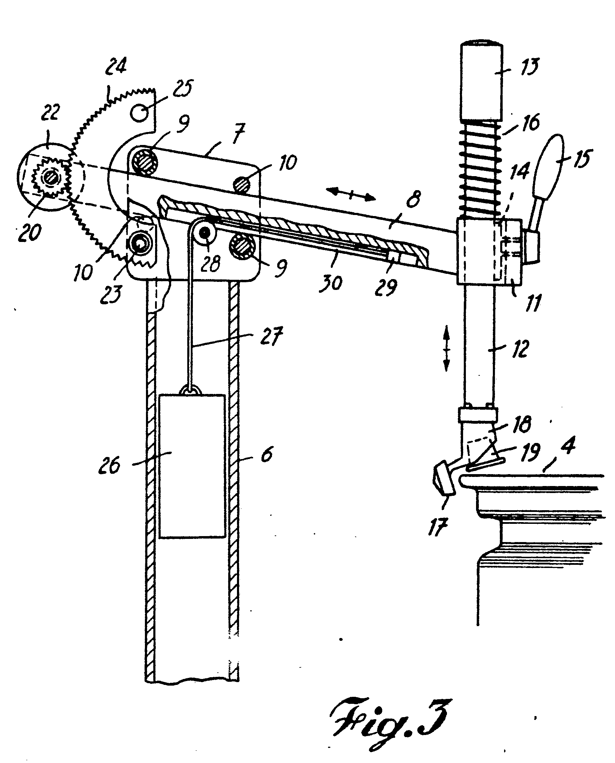

Pour poser un pneu sur une roue, on roule le bras 8 vers l'arrière dans la boîte 7, cela de telle manière que l'outil 17–19 qui sert à poser ou enlever le pneu, soit à distance de la table tournante 2 pour fixer la roue (fig. 2). On fait pivoter sur son axe 23 le segment denté 24 en position extrême vers l'avant (fig. 2). On pose une roue 4 entre les griffes 3 de la table tournante 2 et on fixe la roue à cette table tournante qui peut être d'un type quelconque. On pose ensuite un pneu obliquement sur la roue de la manière bien connue. Alors à l'aide de la poignée 13 de la barre 12, on roule le bras 8 vers la roue 4 et on débloque la barre 12 par la poignée 15 pour faire descendre l'outil 17–19, cela jusqu'à ce que le bord supérieur extrême de la roue se trouve en contact avec l'outil dans l'angle formé entre le galet de pression 17 et son support 18. Puis on fixe par la poignée 15, la barre 12 dans cette position. Par la position oblique du bras 8, le moindre déplacement de celui-ci en direction opposée à la roue donne automatiquement un dégagement de l'outil 17–19 tant dans le plan vertical que dans le plan horizontal, par rapport à la roue 4. Pour placer le galet de pression 17 et le galet de guidage 19 à la distance désirée de la roue, de telle manière qu'il n'y ait aucun frottement entre la roue 4 et l'outil 17–19, on fait pivoter autour de l'axe 23 vers la roue libre dentée 20, le segment denté 24, cela de telle manière que ces deux organes soient en prise l'un avec l'autre. En continuant à faire pivoter le segment denté 24, la roue libre dentée 20 tourne dans le sens de rotation des aiguilles d'une montre et le bras 8 se déplace et cela jusqu'à ce que l'outil 17–19 occupe, par rapport à la roue, la position désirée (fig. 3). Par le fait que la roue libre dentée 20 ne peut pas tourner dans le sens opposé à celui de la rotation des aiguilles d'une montre, il est impossible de déplacer, dans cette position, le bras 8 vers la roue 4, tandis qu'il est toutefois possible que le bras 8 avec l'outil 17–19 puisse s'éloigner de la roue 4 lorsque par exemple la roue n'est pas tout à fait ronde et que de ce fait la roue exerce une pression sur l'outil. De même on peut écarter entièrement l'outil 17–19 de la roue 4 en faisant rouler le bras 8 vers l'arrière, puis le ramener vers la roue sans devoir recommencer le réglage. Lorsque le talon du pneu est posé sous le galet de pression 17 et tout contre le galet de guidage 19, la table tournante 2 qui maintient fermement la roue est mise en marche, cela de telle manière que la roue commandée soit animée d'un mouvement de rotation et que le pneu soit entièrement posé sur la roue, cela sans que l'outil de montage ou l'outil de démontage vienne en contact avec la roue.

Il va sans dire, que le montage des pièces l'une par rapport à l'autre, la forme et les dimensions des pièces ici décrites peuvent varier et que les pièces même ici déterminées, peuvent être remplacées par d'autres poursuivant le même but.

## Revendications

1. Mécanisme pour régler à distance d'une roue (4) fixée sur une table tournante (2), l'outil (17–19) d'un appareil utilisé pour poser et enlever un pneu d'automobile, lequel mécanisme se compose en ordre principal d'une colonne verticale (6), d'un bras (8) qui peut être déplacé transversalement et fixé dans cette colonne verticale et dans lequel il est placé une barre (12) axialement déplaçable en hauteur et qui, à la partie inférieure, porte l'outil (17–19) pour poser et enlever le pneu, mécanisme caractérisé par le fait que le bras (8) est monté en déclivité vers la roue (4) et qu'il est prévu entre le bras (8) et la colonne verticale (6) un moyen de déplacement et de fixation (20 à 25) permettant d'une part le déplacement entièrement libre et le déplacement progressif du bras (8) dans un sens opposé à la roue (4) par rapport à la colonne verticale (6) afin de régler la distance entre la roue (4) et l'outil (17–19) et d'autre part le blocage du bras (8) dans le sens de la roue (4) par rapport à la colonne verticale (6).

2. Mécanisme selon la revendication 1, caractérisé par le fait que le moyen de déplacement et de fixation (20 à 25) pour déplacer et bloquer le bras (8), se compose d'une roue libre dentée (20) montée sur le bras (8), pouvant tourner librement dans le sens de la rotation des aiguilles d'une montre, étant bloquée dans l'autre sens et coopérant avec un segment denté (24) avec poignée (25) qui est pivotable autour d'un axe (23) monté sur la partie fixe de l'appareil.

3. Mécanisme selon la revendication 2, caractérisé par le fait que le segment denté (24) coopère avec un moyen de serrage pour maintenir ce segment denté dans une position désirée.

4. Mécanisme selon la revendication 2, caractérisé par le fait que la roue libre dentée (20) est placée entre deux brides (21–22) en forme de disques, lesquelles brides recouvrent également la partie en prise avec la roue dentée libre du segment denté (24).

5. Mécanisme selon la revendication 1, caractérisé par le fait que pour maintenir en équilibre le bras (8) en déclivité, il est placé dans la colonne verticale (6) un contrepoids (26) relié au bras (8) par l'intermédiaire d'un câble (27) passant par-dessus un galet de câble (28) monté dans la colonne verticale (6).

6. Mécanisme selon la revendication 1, caractérisé par le fait que le bras (8) pouvant se déplacer axialement, est guidé entre au moins deux galets de guidage (9) montés en diagonale dans la colonne verticale (6).

## Claims

1. Mechanism for adjusting the distance between a wheel (4) fixed upon a turntable (2) and the tool (17-19) of an apparatus for fitting and removing an automobile tire, which mechanism mainly consists of a vertical column (6), an arm (8) which can be moved transversely and fixed in aforesaid column and in which is fitted a bar (12) which can be axially adjusted in height and which, at its lower end, carries the tool (17-19) for fitting and removing the tire, mechanism which is characterized by the fact that the arm (8) is fitted at a downward slant towards the wheel (4) and that a means (20 to 25) is provided between the arm (8) and the vertical column (6) for moving and fixing, which on the one hand permits the totally free and gradual movement of the arm (8) in a direction opposite to that of the wheel (4) with respect to the vertical column (6) in order to adjust the distance between the wheel (4) and the tool (17-19), and on the other hand provides for the blockage of the arm (8) in the direction towards the wheel (4) with respect to the vertical column (6).

2. Mechanism according to claim 1, characterized by the fact that the means for moving and fixing (20 to 25) in view of moving and fixing the arm (8), is made up of a toothed freewheel (20) fitted on the arm, which can rotate freely in clockwise direction and is blocked in the other direction, cooperating with a toothed segment (24) provided with a handle (25), and which can pivot around a shaft (23) which is fitted on the fixed part of the apparatus.

3. Mechanism according to claim 2, characterized by the fact that the toothed segment (24) cooperates with a clamping means in order to maintain the toothed segment in any desired position.

4. Mechanism according to claim 2, characterized by the fact that the toothed freewheel (20) is located between two flanges (21-22) in disc shape, which flanges also cover the meshing portion of the toothed segment (24) with the toothed freewheel.

5. Mechanism according to claim 1, characterized by the fact that in order to maintain the inclined arm (8) in balance, a counterweight (26) is located within the vertical column (6) and is linked to the arm (8) by means of a cable (27) which passes over a cable roller·(28) provided in the vertical column (6).

6. Mechanism according to claim 1, characterized by the fact that the arm (8), which can move axially, is guided by at least two guide rollers (9) fitted diagonally in the vertical column (6).

## Ansprüche

1. Mechanismus für das Einstellen der Entfernung zwischen einem Rad (4), das auf einem Drehtisch (2) befestigt ist, und dem Werkzeug (17-19) eines Geräts, das gebraucht wird, um einen Automobilreifen aufzusetzen oder abzunehmen, welcher Mechanismus in der Hauptsache aus einer senkrechten Säule (6), einem Arm (8), der quer verschoben und befestigt werden kann in dieser senkrechten Säule und in dem eine Stange (12) angebracht ist, die axial in die Höhe verschoben werden kann und die am unteren Teil das Werkzeug (17-19) trägt, um den Reifen aufzusetzen und abzunehmen, besteht, welcher Mechanismus dadurch gekennzeichnet ist, dass der Arm (8) zum Rad (4) hin geneigt montiert ist und dass zwischen dem Arm (8) und der senkrechten Säule (6) ein Verschiebungs- und Befestigungsmittel (20 bis 25) vorgesehen ist, das einerseits die vollständig freie Verschiebung und die progressive Verschiebung des Arms (8) in einer dem Rad (4) im Verhältnis zur senkrechten Säule (6) entgegengesetzten Richtung für die Einstellung der Entfernung zwischen dem Rad (4) und dem Werkzeug (17-19) und anderseits die Blockierung des Arms (8) in der Richtung zum Rad (4) im Verhältnis zur senkrechten Säule (6) ermöglicht.

2. Mechanismus gemäss Anspruch 1, dadurch gekennzeichnet, dass das Verschiebungs- und Befestigungsmittel (20 bis 25) für die Verschiebung und Blockierung des Arms (8) aus einem auf dem Arm (8) montierten Freilauf-Zahnrad (20) besteht, das in Uhrzeigerrichtung sich frei drehen kann, nach der anderen Richtung blockiert ist und zusammenwirkt mit einem gezahnten Segment (24) mit Griff (25), das um eine Achse (23) schwenkbar montiert ist auf dem festen Teil des Geräts.

3. Mechanismus gemäss Anspruch 2, dadurch gekennzeichnet, dass das gezahnte Segment (24) zusammenwirkt mit einem Klemmittel für das Halten dieses gezahnten Segments in einer bezeichneten Stellung.

4. Mechanismus gemäss Anspruch 2, dadurch gekennzeichnet, dass das Freilauf-Zahnrad (20) zwischen zwei Flanschen (21-22) sitzt, die eine Scheibenform haben, welche Flansche ebenfalls den im Eingriff mit dem Freilauf-Zahnrad des gezahnten Segments (24) befindlichen Teil decken.

5. Mechanismus gemäss Anspruch 1, dadurch gekennzeichnet, dass zur Haltung des geneigten Arms (8) im Gleichgewicht, in der senkrechten Säule (6) ein Gegengewicht (26) angebracht ist, das mit dem Arm (6) durch ein Kabel (26) verbunden ist, das über eine Kabelrolle (28) läuft, die in der senkrechten Säule (6) montiert ist.

6. Mechanismus gemäss Anspruch 1, dadurch gekennzeichnet, dass der Arm (8), der axial verschiebbar ist, geführt wird zwischen wenigstens zwei Führungsrollen (9), die in der senkrechten Säule (6) diagonal montiert sind.

Fig.1

Fig.2

*Fig.3*